# EUROPEAN PATENT SPECIFICATION

(11) **EP 2 679 620 B1**
(45) Date of publication and mention of the grant of the patent: **09.06.2021**
(21) Application number: 12749131.4
(22) Date of filing: 09.02.2012
(51) Int. Cl.: C08J 7/043, C08J 7/046, C08G 18/48, C08G 18/75, C08G 18/79, C08G 18/80, C08G 18/02, C08G 18/08, C08G 18/12, C08G 18/44, G02B 1/10, C08J 7/04, C08G 18/10

(54) **METHOD OF MAKING A LAMINATED POLYESTER FILM**
VERFAHREN ZUR HERSTELLUNG EINES LAMINIERTEN POLYESTER FILMS
UN PROCÉDÉ DE FABRICATION D'UN FILM DE POLYESTER STRATIFIÉ

(30) Priority: 22.02.2011 JP 2011035281; 05.09.2011 JP 2011192210
(43) Date of publication of application: 01.01.2014
(73) Proprietor: Mitsubishi Chemical Corporation, Tokyo (JP)
(72) Inventor: KATO, Takeshi, Maibara-shi Shiga 521-0234 (JP); KAWASAKI, Taishi, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2012/052965
(87) International publication number: WO 2012/114888

(56) References cited:
- EP-A1- 1 764 161
- JP-A- H03 229 726
- JP-A- 2000 229 395
- JP-A- 2001 058 383
- JP-A- 2002 338 718
- JP-A- 2004 307 684
- JP-A- 2004 307 684
- JP-A- 2007 055 217
- JP-A- 2007 055 217
- JP-A- 2009 155 408
- JP-A- 2009 155 409
- JP-A- 2009 178 955
- JP-A- 2009 178 955

## Description

### TECHNICAL FIELD

The present invention relates to a method of making a laminated polyester film, and more particularly, to a method of making a laminated polyester film that can be suitably used as various optical members required to exhibit good adhesion to various surface functional layers such as, for example, a hard coat layer, a microlens layer, a prism layer, etc., which are employed in a backlight unit of liquid crystal displays, etc.

### BACKGROUND ART

In recent years, polyester films have been frequently used as various kinds of optical films, e.g., in various applications such as an antireflection film, a touch panel, a prism sheet, a light diffusion sheet and an electromagnetic shielding film as members of liquid crystal displays or plasma displays. A base film used for these members has been required to have excellent transparency and visibility.

These films have been often subjected to hard coating treatment for forming a hard coat as a back layer or a primer layer of the above optical films in order to enhance an anti-curling property and a mar resistance thereof, etc. In the hard coating treatment, in order to enhance adhesion between a polyester film as a base material and a hard coat layer, a coating layer having an easy-bonding property is generally provided as an intermediate layer therebetween. As the coating layer having an easy-bonding property, there are known, for example, those coating layers produced from polyester resins, acrylic resins, urethane resins or the like (Patent Documents 1 to 8).

In recent years, in the field of liquid crystal displays, there is an increasing demand for displays having a larger image screen and a higher image quality. In addition, with the considerable reduction in price of the liquid crystal displays, it has been required to achieve considerable cost-down in processing steps for a hard coat layer, etc. For this reason, there tends to occur a rapid change in construction of the hard coat layer, etc., so that it has been required to provide polyester films having an easy-bonding property which can exhibit good adhesion to various layers as well as a good wet heat resistance.

### CITATION LIST

### PATENT LITERATURES

Patent Document 1: Japanese Patent Application Laid-Open (KOKAI) No. 8-281890(1996)
Patent Document 2: Japanese Patent Application Laid-Open (KOKAI) No. 11-286092(1999)
Patent Document 3: Japanese Patent Application Laid-Open (KOKAI) No. 2000-229395
Patent Document 4: JP-A-2009/178955
Patent Document 5: JP-A-2007/055217
Patent Document 6: EP-A1-1764161
Patent Document 7: JP-A-2004/307684
Patent Document 8: JP-A-032229726

### SUMMARY OF THE INVENTION

### Problems to be Solved by the Invention

The present invention has been accomplished to solve the above conventional problems. An object of the present invention is to provide a laminated polyester film which exhibits an excellent adhesion property to various surface functional layers such as a hard coat layer, a microlens layer and a prism layer, and can be suitably used, for example, in a backlight unit of liquid crystal displays, etc.

### Means for Solving Problems

As a result of the present inventors' earnest study in view of the above problems, it has been found that these problems can be readily solved by using a laminated polyester film having a specific structure. The present invention has been attained on the basis of this finding.

That is, in an aspect of the present invention, there is provided a method of making a laminated polyester film according to claim 1.

### Effect of the Invention

In accordance with the present invention, there can be provided a laminated polyester film which is excellent in adhesion to various surface functional layers such as a hard coat layer, a microlens layer and a prism layer when these layers are formed thereon. Therefore, the present invention has a high industrial value.

### Preferred Embodiments for Carrying Out the Invention

The laminated polyester film of the present invention may have either a single layer structure or a multilayer structure. Also, the laminated polyester film may have not only a two or three layer structure but also a four or more multilayer structure.

The polyester used in the laminated polyester film may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyester include polyethylene terephthalate or the like. On the other hand, as a dicarboxylic acid component of the copolyester, there may be mentioned at least one compound selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned at least one compound selected from the group consisting of ethylene glycol, diethylene glycol, propylene glycol, butanediol, 4-cyclohexanedimethanol and neopentyl glycol.

The polymerization catalyst used for production of the polyester is not particularly limited, and any suitable conventionally known compounds may be used in the present invention. Examples of the polymerization catalyst include an antimony compound, a titanium compound, a germanium compound, a manganese compound, an aluminum compound, a magnesium compound and a calcium compound. Among these polymerization catalysts, from the standpoint of enhancing a brightness of the film, preferred is a titanium compound.

The polyester film may also comprise an ultraviolet absorber in order to prevent deterioration of liquid crystals and the like used in liquid crystal displays by irradiation with ultraviolet rays. The ultraviolet absorber is not particularly limited as long as it is a compound having a capability of absorbing an ultraviolet ray and can withstand heat applied during a process for producing the polyester film.

As the ultraviolet absorber, there are generally known an organic ultraviolet absorber and an inorganic ultraviolet absorber. In view of a good transparency, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the purpose of mainly imparting an easy-slipping property to the film and preventing occurrence of flaws in the film during the respective steps, particles may be compounded in the polyester layer in the film of the present invention. The kinds of particles to be compounded in the polyester layer are not particularly limited as long as the particles are capable of imparting a good easy-slipping property to the film. Specific examples of the particles include inorganic particles such as particles of silica, calcium carbonate, magnesium carbonate, barium carbonate, calcium sulfate, calcium phosphate, magnesium phosphate, kaolin, aluminum oxide, titanium oxide, etc, and organic particles such as particles of an acrylic resin, a styrene resin, a urea resin, a phenol resin, an epoxy resin, a benzoguanamine resin, etc. Further, there may also be used deposited particles obtained by precipitating and finely dispersing a part of metal compounds such as a catalyst during the process for production of the polyester.

On the other hand, the shape of the particles used in the **polyester layer** is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.01 to 5 *µ*m and preferably 0.1 to 3 *µ*m. When the average particle diameter of the particles is less than 0.01 *µ*m, the particles may fail to impart a sufficient easy-slipping property to the polyester layer, or tend to be aggregated together and therefore exhibit a poor dispersibility, which tends to result in deterioration in transparency of the resulting film. On the other hand, when the average particle diameter of the particles is more than 5 *µ*m, the surface roughness of the obtained film tends to be too coarse, so that there tend to arise various problems when forming various surface functional layers such as a conductive layer, etc., thereon in the subsequent steps.

Further, the content of the particles in the polyester layer is usually in the range of not more than 5% by weight and preferably 0.0005 to 2% by weight. When the content of the particles in the polyester layer is less than 0.0001% by weight, the resulting film tends to be insufficient in easy-slipping property. On the other hand, when the content of the particles in the polyester layer is more than 5% by weight, the resulting film tends to be insufficient in transparency.

The method of adding the particles into the polyester layer is not particularly limited, and any conventionally known methods can be suitably used therefor. For example, the particles may be added at any optional stages in the process for production of the polyester constituting the respective layers of the film. The particles are preferably added to the polyester after completion of an esterification reaction or a transesterification reaction thereof.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film may also comprise, in addition to the above particles, known additives such as an antioxidant, an antistatic agent, a thermal stabilizer, a lubricant, a dye, a pigment, etc., if required.

The thickness of the polyester film is not particularly limited as long as it lies within any suitable range capable of forming a film shape, and is usually in the range of 10 to 350 *µ*m and preferably 50 to 250 *µ*m.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an undrawn sheet. In this case, in order to enhance a flatness of the sheet, it is preferred to enhance adhesion between the sheet and a rotary chilled drum. For this purpose, an electrostatic pinning method and/or a liquid coating adhesion method are preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3 to 6 times. Next, the thus drawn sheet is drawn in the direction perpendicular to the drawing direction of the first stage. In this case, the drawing temperature is usually 70 to 170°C, and the draw ratio is usually 3 to 7 times and preferably 3.5 to 6 times. Successively, the resulting biaxially drawn sheet is subjected to heat-setting at a temperature of 180 to 270°C under a tension or relaxation within 30% to obtain a biaxially oriented film. Upon the above drawing steps, there may also be used the method in which the drawing in each direction is carried out in two or more stages. In such a case, the multi-stage drawing is preferably performed such that the draw ratio in each of the two directions is finally fallen within the above-specified range.

Also, upon producing the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the film. Successively, the obtained biaxially drawn sheet is subjected to heat-setting at a temperature of 170 to 250°C under a tension or relaxation within 30% to obtain a drawn oriented film. As the apparatus used in the above simultaneous biaxial drawing method, there may be employed those drawing machines of any conventionally known type such as a screw type drawing machine, a pantograph type drawing machine and a linear drive type drawing machine.

Next, the method of forming the coating layer constituting the laminated polyester film is explained. The coating layer may be formed by either an in-line coating method in which the surface of the polyester film is subjected to coating treatment during the film formation step of the polyester film, or an off-line coating method in which the polyester film once produced is transferred to an outside of the film production system and subjected to coating treatment. Among these methods, the in-line coating method is preferably used because the coating layer can be produced simultaneously with formation of the polyester film and therefore obtained at low costs.

For example, in the case of a sequential biaxial drawing, the in-line coating treatment may be carried out, in particular, after completion of the longitudinal drawing but before initiation of the lateral drawing, although not particularly limited thereto. When the coating layer is formed on the polyester film by the in-line coating method, the coating can be carried out simultaneously with formation of the polyester film, and the coating layer can be treated at a high temperature in the heat-setting step of the polyester film after subjected to the drawing. As a result, it is possible to enhance properties such as adhesion to various surface functional layers to be formed on the coating layer, and a heat wet resistance, etc. In addition, when the coating step is conducted prior to the drawing in the in-line coating method, the thickness of the coating layer may be suitably varied by controlling the draw ratio, and therefore a uniform coating for formation of a thin film can be performed as compared to the off-line coating method. That is, by conducting the in-line coating method, in particular, before the drawing, it is possible to produce a film suitable as the polyester film used in the present invention.

In the present invention, it is essentially required that the polyester film is provided, on at least one surface thereof, with the coating layer which is formed by applying a coating solution comprising an active methylene-blocked polyisocyanate compound thereonto.

The coating layer formed according to the present invention is capable of enhancing an adhesion property of the resulting film to various surface functional layers such as a hard coat layer.

The active methylene-blocked polyisocyanate compound used in the present invention means a compound having such a structure that an isocyanate group of a polyisocyanate compound is protected with an active methylene compound, and may be used for enhancing adhesion of the coating layer to various surface functional layers such as a hard coat layer, a microlens layer and a prism layer which are formed on the coating layer, or improving a wet heat resistance of the coating layer.

Examples of the polyisocyanate compound include an aliphatic polyisocyanate compound, an alicyclic polyisocyanate compound and an aromatic polyisocyanate compound.

Specific examples of the aliphatic polyisocyanate compound include polyisocyanate compounds derived from aliphatic diisocyanates such as tetramethylene diisocyanate, pentamethylene diisocyanate, hexamethylene diisocyanate, 2,2,4-trimethyl-1,6-diisocyanatohexane and lysine diisocyanate, lysine triisocyanate, 4-isocyanato-methyl-1,8-octamethylene diisocyanate, bis(2-isocyanatoethyl) 2-isocyanatoglutarate, and compounds derived from these isocyanate compounds. Among these aliphatic polyisocyanate compounds, from the viewpoint of good industrial availability, preferred is hexamethylene diisocyanate.

Specific examples of the alicyclic polyisocyanate compound include isophorone diisocyanate, 1,3-bis(isocyanatomethyl)cyclohexane, 4,4'-dicyclohexylmethane diisocyanate, norbornene diisocyanate, hydrogenated xylylene diisocyanate and compounds derived from these isocyanate compounds. Among these alicyclic polyisocyanate compounds, from the viewpoints of a good weathering resistance and a good industrial availability, preferred is isophorone diisocyanate.

Specific examples of the aromatic polyisocyanate compound include 2,4-tolylene diisocyanate, 2,6-tolylene diisocyanate, 4,4'-diphenylmethane diisocyanate, naphthylene diisocyanate, xylylene diisocyanate and compounds derived from these isocyanate compounds.

Among these polyisocyanate compounds, preferred are aliphatic polyisocyanate compounds and alicyclic polyisocyanate compounds because they are excellent in weathering resistance. Further, among the aliphatic polyisocyanate compounds, preferred are aliphatic polyisocyanate compounds derived from aliphatic diisocyanates, and especially preferred is hexamethylene diisocyanate. These isocyanate compounds may be used alone or in combination of any two or more thereof.

The active methylene-blocked polyisocyanate compound may be synthesized by reacting an isocyanate group of a polyisocyanate compound with an active methylene-based blocking agent.

Examples of the active methylene-based blocking agent include an isobutanoyl acetic acid ester, an n-propanoyl acetic acid ester, an n-butanoyl acetic acid ester, an n-pentanoyl acetic acid ester, an n-hexanoyl acetic acid ester, a 2-ethyl-heptanoyl acetic acid ester, a malonic acid ester, an acetoacetic acid ester and acetyl acetone. Among these active methylene-based blocking agents, from the standpoints of an excellent low-temperature curability and an excellent storage stability even in the presence of water, preferred are an isobutanoyl acetic acid ester, an n-propanoyl acetic acid ester, an n-butanoyl acetic acid ester, an n-pentanoyl acetic acid ester, an n-hexanoyl acetic acid ester and a 2-ethyl-heptanoyl acetic acid ester, more preferred are an isobutanoyl acetic acid ester, an n-propanoyl acetic acid ester and an n-pentanoyl acetic acid ester, and still more preferred is an isobutanoyl acetic acid ester. Specific examples of the isobutanoyl acetic acid ester include methyl isobutanoyl acetate, ethyl isobutanoyl acetate, n-propyl isobutanoyl acetate, isopropyl isobutanoyl acetate, n-butyl isobutanoyl acetate, isobutyl isobutanoyl acetate, t-butyl isobutanoyl acetate, n-pentyl isobutanoyl acetate, n-hexyl isobutanoyl acetate, 2-ethylhexyl isobutanoyl acetate, phenyl isobutanoyl acetate and benzyl isobutanoyl acetate. Among these isobutanoyl acetic acid esters, preferred are methyl isobutanoyl acetate and ethyl isobutanoyl acetate. Specific examples of the n-propanoyl acetic acid ester include methyl n-propanoyl acetate, ethyl n-propanoyl acetate, isopropyl n-propanoyl acetate, n-butyl n-propanoyl acetate and t-butyl n-propanoyl acetate. Among these n-propanoyl acetic acid esters, preferred are methyl n-propanoyl acetate and ethyl n-propanoyl acetate. Specific examples of the n-pentanoyl acetic acid ester include methyl n-pentanoyl acetate, ethyl n-pentanoyl acetate, isopropyl n-pentanoyl acetate, n-butyl n-pentanoyl acetate and t-butyl n-pentanoyl acetate. Among these n-pentanoyl acetic acid esters, preferred are methyl n-pentanoyl acetate and ethyl n-pentanoyl acetate.

In the present invention, the aforementioned active methylene-based blocking agents may be used alone or in combination of any two or more thereof. Examples of the active methylene-based blocking agent which may be used in combination with the aforementioned blocking agents include dimethyl malonate and diethyl malonate from the standpoint of an excellent low-temperature curability thereof.

Upon the blocking reaction for production of the active methylene-blocked polyisocyanate compound used in the present invention, the above blocking agents may be used in combination of the existing blocking agents. Examples of the existing blocking agents include an oxime-based blocking agent, a pyrazole-based blocking agent, an alcohol-based blocking agent, an alkyl phenol-based blocking agent, a phenol-based blocking agent, a mercaptan-based blocking agent, an acid amide-based blocking agent, an acid imide-based blocking agent, an imidazole-based blocking agent, a urea-based blocking agent, an amine-based blocking agent, an imine-based blocking agent and a bisulfite-based blocking agent. These existing blocking agents may be used alone or in combination of any two or more thereof.

Examples of the oxime-based blocking agent include formaldoxime, acetaldoxime, acetone oxime, methyl ethyl ketoxime and cyclohexanone oxime. Examples of the pyrazole-based blocking agent include pyrazole, 3-methyl pyrazole and 3,5-dimethyl pyrazole. Examples of the alcohol-based blocking agent include methanol, ethanol, 2-propanol, n-butanol, sec-butanol, 2-ethyl-1-hexanol, 2-methoxyethanol, 2-ethoxyethanol and 2-butoxyethanol. Examples of the alkyl phenol-based blocking agent include monoalkyl phenols such as n-propyl phenol, isopropyl phenol, n-butyl phenol, sec-butyl phenol, t-butyl phenol, n-hexyl phenol, 2-ethylhexyl phenol, n-octyl phenol and n-nonyl phenol, and dialkyl phenols such as di-n-propyl phenol, diisopropyl phenol, isopropyl cresol, di-n-butyl phenol, di-t-butyl phenol, di-sec-butyl phenol, di-n-octyl phenol, di-2-ethylhexyl phenol and di-n-nonyl phenol. Examples of the phenol-based blocking agent include phenol, cresol, ethyl phenol, styrenated phenol and a hydroxybenzoic acid ester. Examples of the mercaptan-based blocking agent include butyl mercaptan and dodecyl mercaptan. Examples of the acid amide-based blocking agent include acetanilide, acetic amide, ε-caprolactam, δ-valerolactam and γ-butyrolactam. Examples of the acid imide-based blocking agent include succinic imide and maleic imide. Examples of the imidazole-based blocking agent include imidazole and 2-methyl imidazole. Examples of the urea-based blocking agent include urea, thiourea and ethylene urea. Examples of the amine-based blocking agent include diphenyl amine, aniline, carbazole, di-n-propylamine, diisopropylamine and isopropylethylamine. Examples of the imine-based blocking agent include ethylene imine and polyethylene imine.

The active methylene-blocked polyisocyanate compound used in the present invention preferably comprises a hydrophilic moiety in order to enhance a blending property thereof in an aqueous coating material. As a method of imparting a hydrophilic moiety to the blocked polyisocyanate compound, there may be mentioned, for example, the method of reacting an isocyanate group of a polyisocyanate compound as a precursor with an active hydrogen-containing hydrophilic compound.

Examples of the active hydrogen-containing hydrophilic compound include polyethylene glycol, a carboxyl group-containing compound, a sulfonic group-containing compound and an amino group-containing compound. These hydrophilic compounds may be used alone or in combination of any two or more thereof.

Examples of the polyethylene glycol include monoalkoxy polyethylene glycols, polyethylene glycol, polyoxypropylene polyoxyethylene copolymer diols and polyoxypropylene polyoxyethylene block polymer diols. Among these polyethylene glycols, especially preferred are monoalkoxy polyethylene glycols such as monomethoxy polyethylene glycol and monoethoxy polyethylene glycol.

Examples of the carboxyl group-containing compound include monohydroxycarboxylic acids, dihydroxycarboxylic acids and derivatives thereof. Among these carboxyl group-containing compounds, preferred are monohydroxycarboxylic acids and dihydroxycarboxylic acids, and more preferred are monohydroxycarboxylic acids.

Specific examples of the carboxyl group-containing compound include hydroxypivalic acid, 2,2-dimethylol propionic acid, 2,2-dimethylol butanoic acid, derivatives of polycaprolactone diols, polyether polyols, etc., obtained using these compounds as an initiator, and salts thereof.

Examples of the sulfonic group-containing compound include aminoethylsulfonic acid, ethylene diamino-propyl-β-ethylsulfonic acid, 1,3-propylene diamine-β-ethylsulfonic acid, N,N-bis(2-hydroxyethyl)-2-aminoethanesulfonic acid, and salts thereof.

Examples of the amino group-containing compound include hydroxy group-containing amino compounds. Specific examples of the hydroxy group-containing amino compounds include dimethyl ethanol amine and diethyl ethanol amine.

Meanwhile, the active methylene-blocked polyisocyanate compound may be designed to undergo the reaction during a drying step or a film-forming step in order to enhance a performance of the resulting coating layer. It is suggested that the thus formed coating layer comprises unreacted crosslinking agents, compounds obtained after the reaction, or a mixture thereof.

In the laminated polyester film, in order to enhance adhesion of the coating layer to various surface functional layers such as a hard coat layer when formed on the coating layer, prevent occurrence of uneven interference, improve a transparency, and attain good surface properties of the coating layer, etc., an optional polymer may be used in combination with the active methylene-blocked polyisocyanate compound.

Specific examples of the polymer which may be used in combination with the active methylene-blocked polyisocyanate compound include polyester resins, urethane resins, acrylic resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc. Among these polymers, from the standpoint of enhancing surface properties and adhesion property of the coating layer, polyester resins, urethane resins or acrylic resins are preferably used in combination with the active methylene-blocked polyisocyanate compound.

When at least one resin selected from a urethane resin and an acrylic resin is used as the polymer which may be used in combination with the active methylene-blocked polyisocyanate compound, the resulting film is suitably used, in particular, as a member for a microlens sheet or a prism sheet used in a backlight unit of liquid crystal displays as described hereinafter.

Meanwhile, in recent years, liquid crystal displays have been extensively used as a display device for TVs, personal computers, digital cameras, mobile phones, etc. The liquid crystal displays have no light-emitting function by themselves. Therefore, liquid crystal displays of such a type in which light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed of a reflection sheet, a light guide plate, a light diffusion sheet and a prism sheet which are successively laminated in this order. The flow of light through such edge light type liquid crystal displays is designed such that the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet is then entered into the prism sheet disposed next to the light diffusion sheet. In the prism sheet, the light entered thereinto is converged in the normal direction and emitted therefrom toward the liquid crystal layer.

The prism sheet used in the above construction serves for improving an optical efficiency of the backlight and enhancing a brightness thereof. As a transparent base film for the prism sheet, there has been generally used a polyester film in view of a transparency and mechanical properties thereof. In general, an easy-bonding coating layer (produced from a polyester resin, an acrylic resin or a urethane resin) may be further provided as an intermediate layer between the polyester film as the base material and the prism layer in order to enhance adhesion therebetween.

The prism layer may be produced, for example, by the following method. That is, an active energy ray-curable coating material is charged into a prism mold, and then a polyester film is placed on the coating material thus charged so as to interpose the coating material between the polyester film and the mold. Next, an active energy ray is irradiated to the active energy ray-curable coating material to cure a resin component therein, and then the mold is removed from the cured resin, thereby obtaining the prism layer formed on the polyester film. In such a method, in order to form an accurate prism pattern on the prism layer, it is required to use a solvent-free type active energy ray-curable coating material. However, the solvent-free type coating material tends to be deteriorated in penetration into an easy-bonding layer laminated on the polyester film and swelling effect as compared to a solvent type coating material and, therefore, tends to be insufficient in adhesion to the polyester film. In order to improve the adhesion property, a coating layer comprising a specific urethane resin has been proposed. However, even such a coating layer may still fail to exhibit a sufficient adhesion property to the solvent-free type coating material (Japanese Patent Application Laid-Open (KOKAI) No. 2-158633(1990)).

In general, transparent sheets on which an optical functional layer for scattering or focusing a light transmitted therethrough, for example, a microlens sheet or a prism sheet on which a microlens layer or a prism layer is provided, are generally referred to as an optical functional film. The laminated polyester film of the present invention comprising a polyester film and a coating layer produced from a coating solution comprising an active methylene-blocked polyisocyanate compound and at least one resin selected from the group consisting of a urethane resin and an acrylic resin which is formed on at least one surface of the polyester film, can be suitably used for forming various functional layers including an optical functional layer obtained from a solvent-free active energy ray-curable coating material on a surface of the coating layer.

The urethane resin may be usually synthesized by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols are obtained from a polyhydric alcohol and a carbonate compound by dealcoholization reaction therebetween. Examples of the polyhydric alcohol include ethylene glycol, 1,2-propylene glycol, 1,3-propylene glycol, 1,2- butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between these compounds include poly(1,6-hexylene)carbonate and poly(3-methyl-1,5-pentylene)carbonate.

Examples of the polyester polyols include those polyols produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polyether polyols include polyethylene glycol, polypropylene glycol, polyethylene/propylene glycol, polytetramethylene ether glycol and polyhexamethylene ether glycol.

In order to enhance an adhesion property of the coating layer to various topcoat layers, among these polyols, preferred are polycarbonate polyols and polyester polyols, and more preferred are polycarbonate polyols.

Examples of the polyisocyanate compound used for obtaining the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resin is synthesized, there may be used a chain extender. The chain extender is not particularly limited as long as it has tow or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resin used in the present invention may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved in water using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance, transparency and adhesion property of the resulting coating layer. Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of a polymerization reaction for production of the urethane resin. For example, there may be used the method in which a carboxyl group-containing resin is used as a comonomer component upon synthesis of a prepolymer of the urethane resin, or the method in which a carboxyl group-containing component is used as any one component of the polyol, the polyisocyanate, the chain extender and the like. In particular, there is preferably used the method in which a carboxyl group-containing diol is used to introduce a desired amount of a carboxyl group into the urethane resin by suitably adjusting an amount of the diol charged. For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the coating material comprising the above-described urethane resin is excellent in stability when preserved in the form of a solution before being coated, and further the coating layer obtained therefrom can be further improved in durability, solvent resistance, water resistance, anti-blocking property, etc.

Further, as the urethane resin, there may be used those urethane resins into which a compound having a carbon-carbon double bond is introduced. The carbon-carbon double bond serves for enhancing adhesion of the coating layer to a layer to be formed on the coating layer. When the layer to be formed on the coating layer is formed of a cured resin obtained by a radical reaction of a carbon-carbon double bond, the cured resin is also capable of reacting with the carbon-carbon double bond present in the coating layer to form a covalent bond, so that it is possible to attain much stronger adhesion therebetween.

The carbon-carbon double bond introduced into the urethane resin is not particularly limited as long as it is capable of reacting with the carbon-carbon double bond present in the compound constituting the layer to be formed on the coating layer, and conventionally known materials may be used to introduce the carbon-carbon double bond into the urethane resin. For example, the carbon-carbon double bond may be introduced in the form of an acryloyl group, a methacryloyl group, a vinyl group, an allyl group or the like into the polyurethane resin. Specific examples of the compound used for introducing the above groups into the urethane resin include (meth)acrylate compounds such as 2-hydroxyethyl (meth)acrylate, 2-hydroxypropyl (meth)acrylate, 2-hydroxybutyl (meth)acrylate and 4-hydroxybutyl (meth)acrylate, and vinyl ether compounds such as 2-hydroxyethyl vinyl ether, diethylene glycol monovinyl ether and 4-hydroxybutyl vinyl ether.

The content of a vinyl group in the urethane resin is not particularly limited, and the vinyl group may be present in the urethane resin, for example, in an amount of not less than 1 mol per 100 mol of a urethane bond, and the vinyl group may also be present in the urethane resin in an amount of not less than 5 mol per 100 mol of a urethane bond when it is intended to further enhance an adhesion property of the coating layer. The upper limit of the content of the vinyl group in the urethane resin is not particularly limited, and is preferably not more than 50 mol and more preferably not more than 25 mol because an excessively large content of the vinyl group in the urethane resin may cause no further increase in effect of the vinyl group introduced, and rather tends to result in deteriorated mechanical properties of the urethane resin.

The acrylic resin used is in the form of a polymer obtained from a polymerizable monomer having a carbon-carbon double bond such as, typically, an acrylic monomer and a methacrylic monomer. The polymer may be either a homopolymer or a copolymer. The polymer may also include a copolymer of the polymer with the other polymer (for example, a polyester, a polyurethane or the like). Examples of the copolymer include a block copolymer and a graft copolymer. In addition, the polymer may also include a polymer obtained by polymerizing the polymerizable monomer having a carbon-carbon double bond in a polyester solution or a polyester dispersion (which may also be in the form of a mixture of the polymers). Further, the polymer may also include a polymer obtained by polymerizing the polymerizable monomer having a carbon-carbon double bond in a polyurethane solution or a polyurethane dispersion (which may also be in the form of a mixture of the polymers). Similarly, the polymer may also include a polymer obtained by polymerizing the polymerizable monomer having a carbon-carbon double bond in the other polymer solution or the other polymer dispersion (which may also be in the form of a mixture of the polymers).

The above polymerizable monomer having a carbon-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing vinyl-based monomers such as (meth)acrylamide, diacetone acrylamide, N-methylol acrylamide and (meth)acrylonitrile; various styrene derivatives such as styrene, α-methyl styrene, divinyl benzene and vinyl toluene, and various vinyl esters such as vinyl acetate and vinyl propionate; various silicon-containing polymerizable monomers such as γ-methacryloxypropyl trimethoxysilane and vinyl trimethoxysilane; various phosphorus-containing vinyl-based monomers; various halogenated vinyl compounds such as vinyl chloride and vinylidene chloride; and various conjugated dienes such as butadiene.

In order to enhance adhesion of the coating layer to various surface functional layers, there may also be used an acrylic resin comprising a functional group such as a carboxyl group, a hydroxyl group, an amino group and an amide group.

Upon forming the coating layer in order to improve surface properties of the coating layer and improve a visibility and a transparency of the resulting film when forming various layers such as a microlens layer and a prism layer on a surface of the coating layer, a binder polymer other than the aforementioned urethane resin or acrylic resin may be used in combination therewith.

In addition, upon forming the coating layer, the above components may also be used in combination with a crosslinking agent such as an oxazoline compound, a melamine compound, an epoxy compound, a carbodiimide compound and an isocyanate compound other than the active methylene-blocked polyisocyanate compound, unless the aimed effects of the present invention are adversely affected.

The oxazoline compound includes those compounds having an oxazoline group in a molecule thereof. Especially preferred are polymers having an oxazoline group which may be in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts of these acids (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

The melamine compounds are compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by co-condensing a urea or the like with a part of melamine. Further, a catalyst may also be used to enhance a reactivity of the melamine compound.

The epoxy compound includes those compounds having an epoxy group in a molecule thereof. Examples of the epoxy compound include condensates of epichlorohydrin with a hydroxyl group of ethylene glycol, polyethylene glycol, glycerol, polyglycerol, bisphenol A, etc., or with an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

The carbodiimide compound includes those compounds having a carbodiimide structure, specifically those compounds having one or more carbodiimide structural units in a molecule thereof. In view of a good adhesion property, etc., of the coating layer, the carbodiimide compound is preferably in the form of a polycarbodiimide compound having two or more carbodiimide structural units in a molecule thereof.

The carbodiimide compound may be synthesized by conventionally known techniques. In general, the carbodiimide compound may be obtained by a condensation reaction of a diisocyanate compound. The diisocyanate compound used for synthesis of the carbodiimide compound is not particularly limited, and may be either an aromatic diisocyanate or an aliphatic diisocyanate. Specific examples of the diisocyanate compound include tolylene diisocyanate, xylylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Unless the aimed effects are eliminated, in order to enhance a water solubility and a water dispersibility of the polycarbodiimide compound, a surfactant as well as a hydrophilic monomer such as a polyalkyleneoxide, a quaternary ammonium salt of a dialkyl amino alcohol and a hydroxyalkylsulfonic acid salt may be added thereto.

Also, in order to improve a slipping property of the coating layer and an anti-blocking property of the resulting film, the coating layer may also comprise particles. Examples of the particles which may be contained in the coating layer include inorganic particles such as particles of silica, alumina, metal oxides and the like, and organic particles such as crosslinked polymer particles.

The composition of the coating solution is not particularly limited as long as the coating solution comprises the active methylene-blocked polyisocyanate compound. As described above, the active methylene-blocked polyisocyanate compound may be used singly or in combination with an optional polymer or a crosslinking agent in the coating solution. The mixing ratios of the respective components when using the active methylene-blocked polyisocyanate compound in combination with the other components may be optionally selected.

In particular, in the case where the laminated polyester film which comprises a coating layer produced from a coating solution comprising he active methylene-blocked polyisocyanate compound and at least one resin selected from a urethane resin and an acrylic resin is used as the aforementioned optical functional film, the mixing ratios of the respective components based on whole nonvolatile components (except for components added as the particles) may be suitably selected from the following ranges.

The active methylene-blocked polyisocyanate compound is usually used in an amount of 3 to 65% by weight, preferably 5 to 60% by weight and more preferably 10 to 55% by weight. When the amount of the active methylene-blocked polyisocyanate compound used is less than 3% by weight, the resulting coating layer tends to become brittle owing to a less content of the crosslinking agent components, and tends to be insufficient in adhesion property or wet heat resistance. When the amount of the active methylene-blocked polyisocyanate compound used is more than 65% by weight, the resulting coating layer tends to be insufficient in adhesion property owing to a less content of the urethane resin or acrylic resin.

The urethane resin is usually used in an amount of 30 to 97% by weight, preferably 35 to 95% by weight and more preferably 40 to 90% by weight. When the amount of the urethane resin used is less than 30% by weight, the resulting coating layer tends to be insufficient in adhesion property owing to a less content of the urethane resin component. When the amount of the urethane resin used is more than 97% by weight, the resulting coating layer tends to become brittle owing to a less content of the crosslinking agent components, and tends to be insufficient in adhesion property or wet heat resistance.

The acrylic resin is usually used in an amount of 30 to 97% by weight, preferably 50 to 95% by weight and more preferably 70 to 90% by weight. When the amount of the acrylic resin used is less than 30% by weight, the resulting coating layer tends to be insufficient in adhesion property owing to a less content of the acrylic resin component. When the amount of the acrylic resin used is more than 97% by weight, the resulting coating layer tends to become brittle owing to a less content of the crosslinking agent components, and tends to be insufficient in adhesion property or wet heat resistance.

Further, the coating layer may also comprise various additives such as a defoaming agent, a coatability improver, a thickening agent, an organic lubricant, an antistatic agent, an ultraviolet absorber, an antioxidant, a foaming agent, a dye and a pigment, if required, unless the aimed effects of the present invention are adversely affected thereby.

The polyester film may also be provided, on its surface opposed to the surface on which the above coating layer is formed, with an additional coating layer. The coating layer formed on the opposite surface of the polyester film may comprise conventionally known components in addition to the aforementioned components. Examples of the components include a polymer such as a polyester resin, an acrylic resin and a urethane resin, a crosslinking agent such as a carbodiimide compound, an oxazoline compound, a melamine compound, an epoxy compound and an isocyanate compound, etc. These components may be used alone or in combination of any two or more thereof.

The analysis of the components contained in the coating layer may be conducted, for example, by surface analysis such as TOF-SIMS.

When forming the coating layer by an in-line coating method, the laminated polyester film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvents may be used alone, or may be appropriately used in the form of a mixture of any two or more thereof.

In the laminated polyester film of the present invention, the film thickness of the coating layer formed on the polyester film is usually in the range of 0.002 to 1 g/m², preferably 0.01 to 0.5 g/m² and more preferably 0.02 to 0.2 g/m². When the film thickness of the coating layer is less than 0.002 g/m², the resulting coating layer may fail to exhibit a sufficient adhesion property. When the film thickness of the coating layer is more than 1 g/m², the resulting coating layer tends to be deteriorated in appearance and transparency, and the obtained film tends to be deteriorated in anti-blocking property.

As the method of forming the coating layer, there may be used conventionally known coating methods such as a reverse gravure coating method, a direct gravure coating method, a roll coating method, a die coating method, a bar coating method and a curtain coating method.

The drying and curing conditions used upon forming the coating layer on the polyester film are not particularly limited. For example, in the case where the coating layer is formed in an off-line coating manner, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed in an in-line coating manner, the coating layer may be subjected to heat-setting usually at a temperature of 70 to 280°C for 3 to 200 sec.

In any of the off-line coating and in-line coating methods, the heat-setting may be used in combination with irradiation with active energy rays such as irradiation with ultraviolet rays, if required. The polyester film constituting the laminated polyester film of the present invention may be previously subjected to surface treatments such as corona treatment and plasma treatment.

In general, in the polyester film, various surface functional layers such as a hard coat layer may be provided on the coating layer. The material used in the hard coat layer is not particularly limited. Examples of the material of the hard coat layer include cured products of monofunctional (meth)acrylates, bifunctional (meth)acrylates, polyfunctional (meth)acrylates and reactive silicon compounds such as tetraethoxysilane. Among these materials, from the viewpoint of satisfying both a high productivity and a good hardness, especially preferred are cured products obtained by polymerizing compositions comprising active energy ray-curable bifunctional (meth)acrylates or polyfunctional (meth)acrylates.

The compositions comprising active energy ray-curable polyfunctional (meth)acrylates are not particularly limited. For example, there may be used a mixture comprising one or more kinds of conventionally known ultraviolet-curable polyfunctional (meth)acrylates, commercially available products as active energy ray-curable hard coat materials, or those materials which further comprise other components in such a range that the objects of the embodiments according to the present invention are not adversely influenced thereby.

In the case where the laminated polyester film according to the present invention which comprises the polyester film and the coating layer formed on at least one surface of the polyester film which is produced from the coating solution comprising the active methylene-blocked polyisocyanate compound and a urethane resin is used as an optical functional film, the coating layer of the laminated polyester film is generally provided thereon with a prism layer, a microlens layer or the like in order to improve a brightness of the film. In recent years, in order to efficiently enhance a brightness of films, there have been proposed prism layers of various shapes. In general, the prism layers have plural rows of prisms each having a triangular sectional shape which are arranged in parallel with each other. Also, there have been proposed microlens layers of various shapes. In general, the microlens layers have a structure in which a number of semispherical convex lenses are provided on a film. Both of the prism layer and the microlens layer may respectively have any conventionally known shapes.

The prism layer may have, for example, such a shape in which a thickness of the layer is 10 to 500 *µ*m, rows of prisms have a pitch of 10 to 500 *µ*m, and respective prisms have a triangular sectional shape having an apex angle of 40° to 100°. As the material of the prism layer, there may be used conventionally known materials. Examples of the material of the prism layer include active energy ray-curable resins, more specifically, polyester resins, epoxy resins, and (meth)acrylate-based resins such as polyester (meth)acrylates, epoxy (meth)acrylates and urethane (meth)acrylates.

The microlens layer may have, for example, such a shape in which a thickness of the layer is 10 to 500 *µ*m, and respective lenses have a semispherical shape having a diameter of 10 to 500 *µ*m. The shape of each lens of the microlens layer may also be a conical shape or a pyramidal shape. As the material of the microlens layer, conventionally known materials may be used therefor similarly to the prism layer. Examples of the material of the microlens layer include active energy ray-curable resins such as monofunctional (meth)acrylates, bifunctional (meth)acrylates and polyfunctional (meth)acrylates.

The composition comprising the active energy ray-curable resin is not particularly limited. Examples of the composition comprising the active energy ray-curable resin include a mixture comprising one or more kinds of known ultraviolet-curable monofunctional (meth)acrylates, bifunctional (meth)acrylates and polyfunctional (meth)acrylates, and a commercially available product as an active energy ray-curable resin material for a prism sheet or an active energy ray-curable resin material for a microlens sheet. In addition, the other components may be added to the composition unless the objects of the embodiments according to the present invention are adversely affected.

The active energy ray-curable monofunctional (meth)acrylates are not particularly limited. Examples of the active energy ray-curable monofunctional (meth)acrylates include alkyl (meth)acrylates such as methyl (meth)acrylate, n-butyl (meth)acrylate, 2-ethylhexyl(meth)acrylate, lauryl (meth)acrylate, stearyl (meth)acrylate, cyclohexyl (meth)acrylate and isobornyl (meth)acrylate; hydroxyalkyl (meth)acrylates such as hydroxyethyl (meth)acrylate, hydroxypropyl (meth)acrylate and hydroxybutyl (meth)acrylate; alkoxyalkyl (meth)acrylates such as methoxyethyl (meth)acrylate, ethoxyethyl (meth)acrylate, methoxypropyl (meth)acrylate and ethoxypropyl (meth)acrylate; aromatic (meth)acrylates such as benzyl (meth)acrylate and phenoxyethyl (meth)acrylate; amino group-containing (meth)acrylates such as diaminoethyl (meth)acrylate and diethylaminoethyl (meth)acrylate; ethyleneoxide-modified (meth)acrylates such as methoxy ethylene glycol (meth)acrylate, phenoxy polyethylene glycol (meth)acrylate and phenyl phenol ethyleneoxide-modified (meth)acrylates; glycidyl (meth)acrylate; tetrahydrofurfuryl (meth)acrylate; and (meth)acrylic acid.

The active energy ray-curable bifunctional (meth)acrylates are not particularly limited. Examples of the active energy ray-curable bifunctional (meth)acrylates include alkanediol di(meth)acrylates such as 1,4-butanediol di(meth)acrylate, neopentyl glycol di(meth)acrylate, 1,6-hexanediol di(meth)acrylate, 1,9-nonanediol di(meth)acrylate and tricyclodecane dimethylol di(meth)acrylate; bisphenol-modified di(meth)acrylates such as bisphenol A ethyleneoxide-modified di(meth)acrylate and bisphenol F ethyleneoxide-modified di(meth)acrylate; polyethylene glycol di(meth)acrylate; polypropylene glycol di(meth)acrylate; urethane di(meth)acrylate; and epoxy di(meth)acrylate.

The active energy ray-curable polyfunctional (meth)acrylates are not particularly limited. Examples of the active energy ray-curable polyfunctional (meth)acrylates include dipentaerythritol hexa(meth)acrylate, pentaerythritol tetra(meth)acrylate, ditrimethylolpropane tetra(meth)acrylate, pentaerythritol tri(meth)acrylate, trimethylolpropane tri(meth)acrylate, isocyanuric acid-modified tri(meth)acrylates such as isocyanuric acid ethyleneoxide-modified tri(meth)acrylate and ε-caprolactone-modified tris(acryloxyethyl)isocyanurate, and urethane acrylates such as pentaerythritol triacrylate hexamethylene diisocyanate urethane prepolymer, pentaerythritol triacrylate toluene diisocyanate urethane prepolymer and dipentaerythritol pentaacrylate hexamethylene diisocyanate urethane prepolymer.

The other components which may be compounded in the composition comprising the active energy ray-curable resin are not particularly limited. Examples of the other components include inorganic or organic fine particles, a polymerization initiator, a polymerization inhibitor, an antioxidant, an antistatic agent, a dispersant, a surfactant, a light stabilizer and a leveling agent. In addition, when forming the surface functional layer by a wet coating method and then drying the thus formed layer, an optional amount of a solvent may be added thereto.

As the method of forming various surface functional layers such as a hard coat layer, a microlens layer and a prism layer, when using the organic materials therefor, there may be employed ordinary wet coating methods such as a roll coating method and a die coating method. The thus formed surface functional layer may be subjected to heating or irradiation with active energy rays such as ultraviolet rays and electron beams, if required, in order to conduct a curing reaction thereof.

### Examples

The present invention is described in more detail below by Examples. However, these Examples are only illustrative and not intended to limit the present invention thereto. In addition, the measuring and evaluating methods used are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and an intrinsic viscosity of the resulting solution was measured at 30°C.

### (2) Measurement of average particle diameter (d₅₀: µm):

Using a centrifugal precipitation type particle size distribution measuring apparatus "SA-CP3 Model" manufactured by Shimadzu Corp., the value of a particle size corresponding to a cumulative fraction of 50% (based on the weight) in equivalent spherical distribution of the particles was measured to determine an average particle diameter thereof.

### (3) Method for evaluation of adhesion property (A):

The active energy ray-curable resin having the below-mentioned coating material composition was applied onto a coating layer-forming surface of a polyester film using a wire bar #16, and dried at 80°C for 1 min to remove a solvent therefrom. Then, the thus formed coating layer was irradiated with an ultraviolet ray using an ultraviolet irradiation device with a 120 W metal halide lamp at an intensity of 180 mJ/cm², thereby forming a hard coat layer having a thickness of 5 *µ*m. The resulting film was measured for an initial adhesion property (adhesion 1) thereof as well as an adhesion property thereof after being kept under the environmental conditions of 80°C and 90% RH for 48 hr (adhesion 2) according to the testing method described in JIS K5600-5-6. More specifically, the surface of the hard coat layer was subjecting to cross-cutting at intervals of 1 mm using a cutter guide to form 100 cross-cuts thereon. Then, a 18 mm-wide tape ("Cellotape (registered trademark) CT-18" produced by Nichiban Co., Ltd.) was attached onto the cut surface of the hard coat layer, and a 2.0 kg roller was reciprocated thereover 20 times to allow the tape to completely adhere onto the hard coat layer. The tape was rapidly peeled off from the hard coat layer at a peel angle of 180°. Then, the surface of the hard coat layer from which the tape was peeled off was observed to measure an area of the hard coat layer peeled off. The evaluation ratings are as follows.
A: Peeled area of the hard coat layer was less than 5%.
B: Peeled area of the hard coat layer was not less than 5% but less than 20%.
C: Peeled area of the hard coat layer was not less than 20% but less than 50%.
D: Peeled area of the hard coat layer was not less than 50%.

### <<Active energy ray-curable resin composition-1>>

| | |
|---|---|
| "KAYARAD-DPHA" (produced by Nippon Kayaku Co., Ltd.) | 24 parts by weight |
| "R-128H" (produced by Nippon Kayaku Co., Ltd.) | 6 parts by weight |
| "Irgacure 651" (produced by BASF) | 1.5 parts by weight |
| Toluene (produced by Wako Pure Chemical Industries Ltd.) | 70 parts by weight |

### (4) Method for evaluation of adhesion property (B):

An active energy ray-curable resin having the following composition was placed in a mold for forming a prism layer in which plural rows of prism-shaped mold cavities each having an apex angle of 65° were arranged with a pitch of 50 *µ*m in parallel with each other. Then, the laminated polyester film was overlapped on the resin in the mold such that the coating layer of the laminated polyester film came into contact with the resin. The active energy ray-curable resin composition was uniformly spread using a roller, and then an ultraviolet ray was irradiated thereover using an ultraviolet irradiation apparatus with a 120 W mercury lamp at an intensity of 100 mJ/cm² to cure the resin. Next, the resulting film was released from the mold to obtain a laminated film on which the prism layer was formed. The surface of the resulting film was cut using a cutter knife to form cut flaws at intervals of 5 mm, and then a 24 mm-wide tape ("Cellotape (registered trademark) CT-24" produced by Nichiban Co., Ltd.) was attached onto the cut surface of the film, and then rapidly peeled off therefrom at a peel angle of 180°. Then, the surface of the film from which the tape was peeled off was observed to measure an area of the surface layer peeled off. The evaluation ratings are as follows.
A: No peel of the layer was observed.
B: Peeled area of the layer was less than 20%.
C: Peeled area of the layer was 20 to 50%.
D: Peeled area of the layer was more than 50%.

### <<Active energy ray-curable resin composition-2>>

| | |
|---|---|
| "Aronix M-315" (produced by Toagosei Co., Ltd.) | 20 parts by weight |
| "NK-Ester A-LEN-10" (produced by Shin-Nakamura Co., Ltd.) | 20 parts by Chemical weight |
| "NEW FRONTIER BPP-4" (produced by Dai-Ichi Kogyo Seiyaku Co., Ltd.) | 30 parts by weight |
| "LIGHT ACRYLATE PO-A" (produced by Kyoeisha Chemical Co., Ltd.) | 5 parts by weight |
| "NK-Ester A-TMPT" (produced by Shin-Nakamura Chemical Co., Ltd.) | 25 parts by weight |
| "LUCIRIN TPO"(produced by BASF) | 3 parts by weight |

The polyesters used in the following Examples and Comparative Examples were prepared as follows.

### <Method for producing polyester (A)>

One hundred parts by weight of dimethyl terephthalate and 60 parts by weight of ethylene glycol were subjected to esterification reaction at 260°C in a nitrogen atmosphere in the presence of 30 ppm of ethyl acid phosphate and 100 ppm of magnesium acetate tetrahydrate as a catalyst both based on a polyester produced. Successively, 50 ppm of tetrabutyl titanate based on the polyester produced were added to the esterification reaction solution, and the resulting mixture was heated to 280°C over 2 hr and 30 min while reducing the reaction pressure to an absolute pressure of 0.3 kPa, and further subjected to melt polycondensation reaction under the same conditions for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol were subjected to esterification reaction at 225°C in a nitrogen atmosphere in the presence of 900 ppm of magnesium acetate tetrahydrate as a catalyst based on a polyester produced. Successively, 3500 ppm of orthophosphoric acid and 70 ppm of germanium dioxide both based on the polyester produced were added to the esterification reaction solution, and the resulting mixture was heated to 280°C over 2 hr and 30 min while reducing the reaction pressure to an absolute pressure of 0.4 kPa, and further subjected to melt polycondensation reaction under the same conditions for 80 min, thereby obtaining a polyester (B) having an intrinsic viscosity of 0.64.

### <Method for producing polyester (C)>

The same procedure as described in the above method for producing the polyester (A) was conducted except that silica particles having an average particle diameter of 2 *µ*m were added in an amount of 0.3 part by weight before subjected to the polycondensation reaction, thereby obtaining a polyester (C).

The compounds constituting the coating layer are as follows.

### (Examples of compounds)

### •Active methylene-blocked polyisocyanate: (I) Blocked polyisocyanate produced by the following method.

One thousand parts by weight of hexamethylene diisocyanate were stirred at 60°C, and 0.1 part by weight of tetramethyl ammonium caprylate as a catalyst was added thereto. After 4 hr, 0.2 part by weight of phosphoric acid was added to the reaction solution to terminate the reaction, thereby obtaining an isocyanurate-type polyisocyanate composition. One hundred parts by weight of the thus obtained isocyanurate-type polyisocyanate composition, 42.3 parts by weight of methoxy polyethylene glycol having a number-average molecular weight of 400 and 29.5 parts by weight of propylene glycol monomethyl ether acetate were charged into a reactor and held therein at 80°C for 7 hr. Thereafter, while the resulting reaction solution was held at 60°C, 35.8 parts by weight of methyl isobutanoyl acetate, 32.2 parts by weight of diethyl malonate and 0.88 part by weight of a 28 wt% methanol solution of sodium methoxide were added thereto, followed by allowing the resulting mixture to stand for 4 hr. In addition, 58.9 parts by weight of n-butanol were added to the mixture, and then the resulting reaction solution was held at 80°C for 2 hr, and thereafter 0.86 part by weight of 2-ethylhexyl acid phosphate was added thereto, thereby obtaining a blocked polyisocyanate.

### •Polyurethane resin: (IIA) Water dispersion of polycarbonate polyurethane synthesized by the following method:

Water dispersion of a urethane resin having a polycarbonate structure which was obtained by adding a carboxylic acid salt solution prepared from 74.3 parts by weight of dimethylol butanoic acid and 50.6 parts by weight of triethylamine to a prepolymer produced from 400 parts by weight of a polycarbonate polyol having a number-average molecular weight of 2000 which was obtained from 1,6-hexanediol and diethyl carbonate, 10.4 parts by weight of neopentyl glycol, 58.4 parts by weight of isophorone diisocyanate and 206.6 parts by weight of hydrogenated diphenylmethane diisocyanate to produce an isocyanate-terminated prepolymer, and then subjecting the thus obtained isocyanate-terminated prepolymer to chain extension reaction using 38.3 parts by weight of isophorone diamine.

### •Polyurethane resin: (IIB)

Polyester polyurethane resin "HYDRAN AP-40" (produced by DIC Corp.)

### •Polyurethane resin: (IIC) Water dispersion of polyether polyurethane resin synthesized by the following method:

Water dispersion of a urethane resin having a polyether structure which was obtained by adding a carboxylic acid salt solution prepared from 25.5 parts by weight of dimethylol propionic acid and 19.2 parts by weight of triethylamine to a prepolymer produced from 400 parts by weight of a polyoxytetramethylene polyol having a number-average molecular weight of 2000 and 116.7 parts by weight of tolylene diisocyanate to produce an isocyanate-terminated prepolymer, and then subjecting the thus obtained isocyanate-terminated prepolymer to chain extension reaction using 42.9 parts by weight of isophorone diamine.

### •Polyester resin: (III) Water dispersion of a polyester resin obtained by copolymerizing the following composition:

Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### •Acrylic resin: (IV) Water dispersion of an acrylic resin obtained by polymerizing the following composition:

Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

### •Particles: (V) Silica sol having an average particle diameter of 0.07 µm

### Example 1:

A mixed raw material obtained by mixing the polyesters (A), (B) and (C) in amounts of 89% by weight, 5% by weight and 6% by weight, respectively, as a raw material for outermost layers (surface layers), and a mixed raw material obtained by mixing the polyesters (A) and (B) in amounts of 95% by weight and 5% by weight, respectively, as a raw material for an intermediate layer, were respectively charged into two extruders, melted therein at 285°C, and then co-extruded therefrom on a chilled roll whose surface was controlled to a temperature of 40°C to form a sheet having a two-kind/three-layer structure (extrusion ratio: surface layer/intermediate layer/surface layer = 1:18:1), followed by cooling and solidifying the thus co-extruded sheet on the chilled roll, thereby obtaining an undrawn sheet. Next, the thus obtained undrawn sheet was drawn utilizing a difference between peripheral speeds of rolls at a film temperature of 85°C and a draw ratio of 3.2 times in a longitudinal direction thereof. Thereafter, a coating solution 1 shown in the below-mentioned Table 1 was applied on both surfaces of the thus obtained longitudinally drawn sheet, and then the resulting sheet was introduced into a tenter where the sheet was drawn at 120°C and a draw ratio of 3.8 times in a lateral direction thereof and then subjected to heat-setting at 225°C. Then, the obtained drawn sheet was relaxed by 2% in a lateral direction thereof, thereby obtaining a polyester film having a thickness of 188 *µ*m which was provided on each surface thereof with a coating layer having a coating amount as shown in Table 2 (after drying). Meanwhile, the respective coating solutions shown in Table 1 comprised 3% by weight of silica sol as the component (V).

The thus obtained polyester film was evaluated for various adhesion properties. As a result, it was confirmed that all of the adhesion properties of the polyester film evaluated were good. Various properties of the thus obtained film are shown in Table 2 below.

### Examples 2 to 12:

The same procedure as in Example 1 was conducted except that the composition of the coating agent was changed to those shown in Table 1, thereby obtaining polyester films. Various properties of the thus obtained polyester films are shown in Table 2, i.e., the respective polyester films had good adhesion properties.

### Comparative Examples 1 to 5:

The same procedure as in Example 1 was conducted except that the composition of the coating agent was changed to those shown in Table 1, thereby obtaining polyester films. The evaluation results of various properties of the thus obtained laminated polyester films are shown in Table 2, i.e., these laminated films had poor adhesion properties.

### Comparative Example 6:

The same procedure as in Example 1 was conducted except that no coating layer was provided, thereby obtaining a polyester film. The evaluation results of various properties of the thus obtained laminated polyester film are shown in Table 2, i.e., the laminated polyester film had poor adhesion properties.

### Examples 13 to 21:

The same procedure as in Example 1 was conducted except that the composition of the coating agent was changed to those shown in Table 3, thereby obtaining polyester films. Various properties of the thus obtained polyester films are shown in Table 4, i.e., the respective polyester films had good adhesion properties. Meanwhile, the respective coating solutions shown in Table 3 comprised 5% by weight of silica sol as the component (V).

**Table 1**

| Coating solution No. | Coating agent composition (wt%) | | | | | |
|---|---|---|---|---|---|---|
| | I | IIA | IIB | IIC | III | IV |
| 1 | 100 | 0 | 0 | 0 | 0 | 0 |
| 2 | 52 | 48 | 0 | 0 | 0 | 0 |
| 3 | 31 | 69 | 0 | 0 | 0 | 0 |
| 4 | 21 | 79 | 0 | 0 | 0 | 0 |
| 5 | 10 | 90 | 0 | 0 | 0 | 0 |
| 6 | 5 | 95 | 0 | 0 | 0 | 0 |
| 7 | 31 | 0 | 69 | 0 | 0 | 0 |
| 8 | 31 | 0 | 0 | 69 | 0 | 0 |
| 9 | 31 | 0 | 0 | 0 | 69 | 0 |
| 10 | 31 | 0 | 0 | 0 | 0 | 69 |
| 11 | 0 | 100 | 0 | 0 | 0 | 0 |
| 12 | 0 | 0 | 100 | 0 | 0 | 0 |
| 13 | 0 | 0 | 0 | 100 | 0 | 0 |
| 14 | 0 | 0 | 0 | 0 | 100 | 0 |
| 15 | 0 | 0 | 0 | 0 | 0 | 100 |

| | | | | | | |
|---|---|---|---|---|---|---|
| (Note: The respective coating solutions shown in Table 1 comprised silica sol in an amount of 3% by weight based on a total weight of the respective components included therein.) | | | | | | |

**Table 2**

| Examples and Comparative Examples | Coating solution No. | Coating amount [ g/m²] | Evaluation of adhesion properties (A) | |
|---|---|---|---|---|
| | | | Adhesion 1 | Adhesion 2 |
| Example 1 | 1 | 0.02 | A | A |
| Example 2 | 2 | 0.02 | A | A |
| Example 3 | 3 | 0.02 | A | A |
| Example 4 | 3 | 0.06 | A | A |
| Example 5 | 3 | 0.09 | A | A |
| Example 6 | 4 | 0.02 | A | A |
| Example 7 | 5 | 0.02 | A | A |
| Example 8 | 6 | 0.02 | A | A |
| Example 9 | 7 | 0.02 | A | A |
| Example 10 | 8 | 0.02 | A | A |
| Example 11 | 9 | 0.02 | A | A |
| Example 12 | 10 | 0.02 | A | A |
| Comparative Example 1 | 11 | 0.02 | D | D |
| Comparative Example 2 | 12 | 0.02 | C | D |
| Comparative Example 3 | 13 | 0.02 | C | D |
| Comparative Example 4 | 14 | 0.02 | C | D |
| Comparative Example 5 | 15 | 0.02 | D | D |
| Comparative Example 6 | Not treated | - | D | D |

**Table 3**

| Coating solution No. | Coating agent composition (wt%) | | |
|---|---|---|---|
| | I | IIA | IV |
| 16 | 53 | 47 | 0 |
| 17 | 42 | 58 | 0 |
| 18 | 32 | 68 | 0 |
| 19 | 11 | 89 | 0 |
| 20 | 5 | 95 | 0 |
| 21 | 32 | 0 | 68 |
| 22 | 11 | 0 | 89 |

| | | | |
|---|---|---|---|
| (Note: The respective coating solutions shown in Table 3 comprised silica sol in an amount of 5% by weight based on a total weight of the respective components included therein.) | | | |

**Table 4**

| Examples and Comparative Examples | Coating solution No. | Coating amount [g/m²] | Evaluation of adhesion property (B) |
|---|---|---|---|
| Example 13 | 16 | 0.02 | A |
| Example 14 | 17 | 0.02 | A |
| Example 15 | 18 | 0.02 | A |
| Example 16 | 18 | 0.06 | A |
| Example 17 | 18 | 0.11 | A |
| Example 18 | 19 | 0.02 | A |
| Example 19 | 20 | 0.02 | B |
| Example 20 | 21 | 0.02 | B |
| Example 21 | 22 | 0.02 | A |

### INDUSTRIAL APPLICABILITY

The method of the present invention can be suitably used in the applications in which it is important to attain a good adhesion property to various surface functional layers such as a hard coat layer, a microlens layer and a prism layer and a good visibility, for example, in various optical films, molding films or the like as members of liquid crystal displays or plasma displays.

## Claims

1. A method of making a laminated polyester film comprising a polyester film, the method comprising the steps of
forming a coating layer on at least one surface of the polyester film,
wherein the coating layer is produced by applying a coating solution comprising an active methylene-blocked polyisocyanate compound and a urethane resin thereonto, wherein the urethane resin is synthesized by the reaction between a polycarbonate polyol and an isocyanate, and wherein the coating layer is provided on a surface thereof with a functional layer that is formed by applying a solvent-free active energy ray-curable coating material thereonto.

2. The method according to claim 1, wherein the functional layer is an optical functional layer.

3. The method according to claim 2, wherein the optical functional layer is a microlens layer or a prism layer.

4. The method according to claim 1, wherein the active methylene-blocked polyisocyanate compound is synthesized by reacting an isocyanate group of a polyisocyanate compound with an active methylene-based blocking agent, wherein the active methylene-based blocking agent is at least one selected from the group consisting of an isobutanoyl acetic acid ester, an n-propanoyl acetic acid ester, an n-butanoyl acetic acid ester, an n-pentanoyl acetic acid ester, an n-hexanoyl acetic acid ester and a 2-ethyl-heptanoyl acetic acid ester.

5. The method according to claim 4, wherein as the active methylene-based blocking agent of active methylene-blocked polyisocyanate compound, dimethyl malonate and/or diethyl malonate is further contained.

## Patentansprüche

1. Verfahren zum Herstellen eines laminierten Polyesterfilms, umfassend einen Polyesterfilm, wobei das Verfahren die Schritte umfasst: Ausbilden einer Beschichtungsschicht auf wenigstens einer Oberfläche des Polyesterfilms, wobei die Beschichtungsschicht durch Aufbringen einer Beschichtungslösung, umfassend eine aktive methylenblockierte Polyisocyanatverbindung und ein Urethanharz, darauf erzeugt wird, wobei das Urethanharz durch die Reaktion zwischen einem Polycarbonatpolyol und einem Isocyanat synthetisiert wird, und wobei die Beschichtungsschicht auf einer Oberfläche davon mit einer Funktionsschicht versehen ist, die durch Aufbringen eines lösungsmittelfreien, durch einen aktiven Energiestrahl härtbaren Beschichtungsmaterials darauf ausgebildet wird.

2. Verfahren nach Anspruch 1, wobei die Funktionsschicht eine optische Funktionsschicht ist.

3. Verfahren nach Anspruch 2, wobei die optische Funktionsschicht eine Mikrolinsenschicht oder eine Prismenschicht ist.

4. Verfahren nach Anspruch 1, wobei die aktive methylenblockierte Polyisocyanatverbindung durch Reagieren einer Isocyanatgruppe einer Polyisocyanatverbindung mit einem aktiven methylenbasierten Blockierungsmittel synthetisiert wird, wobei das aktive methylenbasierte Blockierungsmittel wenigstens eines ist, das aus der Gruppe ausgewählt ist, die aus Isobutanoylessigsäureester, einem n-Propanoylessigsäureester, einem n-Butanoylessigsäureester, einem n-Pentanoylessigsäureester, einem n-Hexanoylessigsäureester und einem 2-Ethylheptanoylessigsäureester besteht.

5. Verfahren nach Anspruch 4, wobei als das aktive methylenbasierte Blockierungsmittel der aktiven methylenblockierten Polyisocyanatverbindung ferner Dimethylmalonat und/oder Diethylmalonat enthalten sind.

## Revendications

1. Procédé de fabrication d'un film polyester stratifié comprenant un film polyester, le procédé comprenant les étapes consistant à former une couche de revêtement sur au moins une surface du film polyester, la couche de revêtement étant produite par application d'une solution de revêtement comprenant un composé polyisocyanate bloqué par le méthylène actif et une résine uréthane sur celle-ci, la résine uréthane étant produite par synthèse par la réaction entre un polycarbonate polyol et un isocyanate, et la couche de revêtement étant pourvue sur sa surface d'une couche fonctionnelle formée par application d'un matériau de revêtement sans solvant durcissable par rayons d'énergie active sur celui-ci.

2. Procédé selon la revendication 1, la couche fonctionnelle étant une couche fonctionnelle optique.

3. Procédé selon la revendication 2, la couche fonctionnelle optique étant une couche microlentille ou une couche prisme.

4. Procédé selon la revendication 1, le composé polyisocyanate bloqué par le méthylène actif étant produit par synthèse en faisant réagir un groupe isocyanate d'un composé polyisocyanate avec un agent de blocage à base de méthylène actif, l'agent de blocage à base de méthylène actif étant au moins l'un sélectionné dans le groupe constitué par un ester d'acide acétique d'isobutanoyle, un ester d'acide acétique de n-propanoyle, un ester d'acide acétique de n-butanoyle, un ester d'acide acétique de n-pentanoyle, un ester d'acide acétique de n-hexanoyle et un ester d'acide acétique de 2-éthyl-heptanoyle.

5. Procédé selon la revendication 4, le malonate de diméthyle et/ou le malonate de diéthyle étant en outre contenus comme agent bloquant à base de méthylène actif du composé polyisocyanate bloqué par le méthylène actif.
